# EUROPEAN PATENT APPLICATION

(11) **EP 4 811 456 A1**
(43) Date of publication of application: **23.09.2026**
(21) Application number: 26165522.9
(22) Date of filing: 17.03.2026
(51) Int. Cl.: H01M 4/525, H01M 4/131, H01M 4/505

(54) **POSITIVE ELECTRODE ACTIVE MATERIALS, POSITIVE ELECTRODES, AND RECHARGEABLE LITHIUM BATTERIES**

(30) Priority: 18.03.2025 KR 20250034847
(71) Applicant: SAMSUNG SDI CO., LTD., Yongin-si, Gyeonggi-do 17084 (KR)
(72) Inventor: CHOI, Seungyeon, 17084 Yongin-si (KR); SHIN, Dongwook, 17084 Yongin-si (KR); CHAE, Youngjoo, 17084 Yongin-si (KR); KIM, Young-Ki, 17084 Yongin-si (KR); PARK, Soojeong, 17084 Yongin-si (KR); HAN, Jihyun, 17084 Yongin-si (KR); LEE, Changjin, 17084 Yongin-si (KR); NA, Jaehyun, 17084 Yongin-si (KR); LEE, Soonrewl, 17084 Yongin-si (KR)
(74) Representative: Maiwald GmbH

(57) **Abstract**

A positive electrode active material includes a lithium nickel-based positive electrode active material having a nickel amount of greater than or equal to about 80 mol% based on 100 mol% of metal in the lithium nickel-based positive electrode active material excluding lithium. The lithium nickel-based positive electrode active material includes aluminum, boron, and magnesium dopants. A peak full width at half maximum (FWHM) of a (003) plane measured by X-ray diffraction analysis is greater than or equal to about 0.1.

## Description

### BACKGROUND

### 1. Field

Positive electrode active materials, positive electrodes including the positive electrode active materials, and rechargeable lithium batteries are disclosed.

### 2. Description of the Related Art

Portable information devices such as cell phones, laptop computers, smart phones, and the like use rechargeable lithium batteries as power sources. Rechargeable lithium batteries can provide high energy density and be easily portable and are therefore used as driving power sources in hybrid or electric vehicles.

Because the need for high-energy density rechargeable lithium batteries is rapidly increasing, there is a need to develop a positive electrode active material for such batteries that can provide high energy density while ensuring stability.

### SUMMARY

Provided are a positive electrode active material that ensures stability while implementing high energy density, a positive electrode in the positive electrode active material, and a rechargeable lithium battery including the positive electrode active material.

According to embodiments, a positive electrode active material for a rechargeable lithium battery includes a lithium nickel-based positive electrode active material having a nickel amount of greater than or equal to about 80 mol% based on 100 mol% of metal in the lithium nickel-based positive electrode active material excluding lithium, wherein the lithium nickel-based positive electrode active material contains aluminum, boron, and magnesium as a dopant, and a peak full width at half maximum (FWHM) of a (003) plane measured by X-ray diffraction analysis is greater than or equal to about 0.1.

The positive electrode active material according to some example embodiments may be capable of providing high energy density while ensuring stability.

Accordingly, a rechargeable lithium battery using the positive electrode active material of some embodiments can have a significantly improved cycle-life.

### BRIEF DESCRIPTION OF THE DRAWINGS

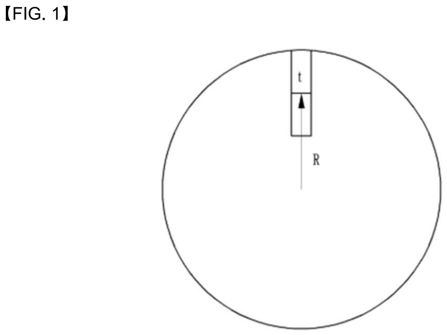

FIG. 1 is a view of radiality in a secondary particle according to embodiments of the present disclosure.
FIGS. 2 to 5 are schematic views of rechargeable lithium batteries according to embodiments of the present disclosure.

### DETAILED DESCRIPTION

Hereinafter, specific embodiments will be described in detail so that those of ordinary skill in the art can easily implement them. However, this disclosure may be embodied in many different forms and is not limited to the embodiments expressly set forth herein.

The terminology used herein is used to describe embodiments only, and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Herein, terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

Here, "or" is not to be construed as an exclusive meaning, for example, "A or B" is construed to include A, B, A+B, and the like.

The term "metal" includes metals and also metalloids (semi-metals), wherein the term 'metalloid (semi-metal)' refers to a chemical element selected from the group consisting of B, Si, As, Te, and At. The heavier homologues of each of these metalloids represent metals, and the elements of groups 1-12 of the periodic table (excluding H) represent metals.

The parameters mentioned herein are determined as follows:

### (a) X-ray Diffraction (XRD) analysis for FWHM of (003) and (104) planes:

The XRD analysis is conducted using a CuKα radiation source (wavelength: 1.5406 Å) at an acceleration voltage of 40 kV and a current of 40 mA. The sample is prepared by milling the positive electrode active material powder, and the measurement is performed at a scan speed of 1°/min in a 2θ range of 10° to 90°. The FWHM values are calculated using a Gaussian fitting method for the corresponding diffraction peaks based on the baseline corrected data.

### (b) Average particle diameter (D50) of secondary particles:

The D50 value is determined using a laser diffraction particle size analyzer (PSA). The sample is dispersed in an aqueous medium with an ultrasonic treatment for 5 minutes. The D50 is defined as the particle diameter at a cumulative volume of 50% in the volume-based particle size distribution, calculated using the Mie theory, with an average value obtained from at least three measurements.

### (c) Grain size and Aspect ratio by EBSD analysis:

The EBSD measurement is performed using a QUANTAX EBSD system (Bruker Corp.) at an acceleration voltage of 20 keV. The sample is prepared by ion milling the cross-section of the secondary particles using a cross-sectional polisher (CP, Ilion, Gatan Inc.). The grain size is defined as the equivalent circle diameter of the primary particles identified in the EBSD map, and the aspect ratio is calculated as the ratio of the major axis length to the minor axis length of the primary particles. At least 50 primary particles are randomly selected from the secondary particles to calculate the mean values of the grain size and the aspect ratio.

### Positive Electrode Active Material

Embodiments of the present disclosure provide a positive electrode active material for a rechargeable lithium battery including a lithium nickel-based positive electrode active material having a nickel amount of greater than or equal to about 80 mol% based on 100 mol% of metal in the positive electrode active material excluding lithium, wherein the lithium nickel-based positive electrode active material includes aluminum, boron, and magnesium as a dopant, and a peak full width at half maximum (FWHM) of a (003) plane measured by X-ray diffraction analysis is greater than or equal to about 0.1.

The lithium nickel-based positive electrode active material has a nickel amount of greater than or equal to about 80 mol% based on 100 mol% of a metal in the lithium nickel-based positive electrode active material excluding lithium.

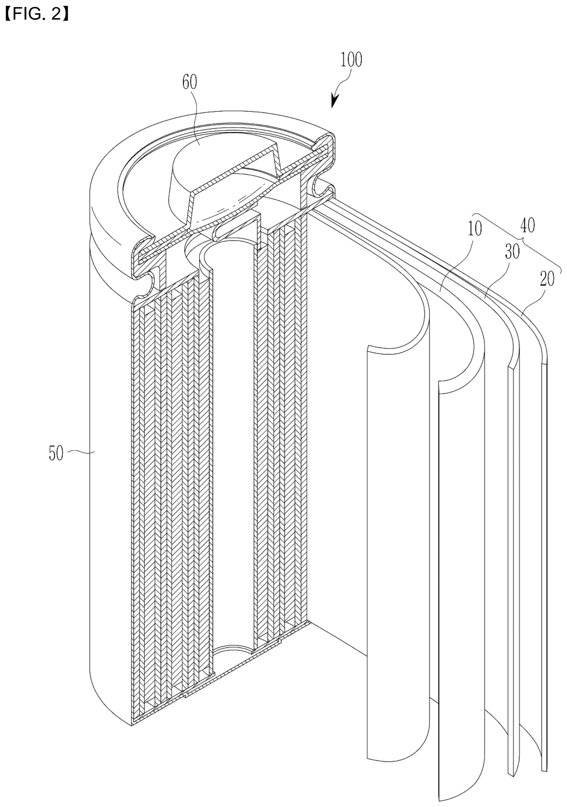

If the lithium nickel-based positive electrode active material does not contain any dopant at all, a rapid volume change may occur during the charge/discharge process of the rechargeable lithium battery, which may cause cracks. According to embodiments of the present disclosure the lithium nickel-based positive electrode active material contains aluminum and boron as two dopants capable of controlling particle growth during its synthesis process. The aluminum (Al) promotes particle growth, and the boron (B) inhibits particle growth. By combining and using these, the particle growth of the lithium nickel-based positive electrode active material may be controlled, the aspect ratio can be controlled, and a radial structure may be formed. In embodiments, a "radial" structure means that the thickness (t) direction of the primary particles is arranged perpendicular to the direction (R) toward the center of the secondary particles. Such a radial structure is shown in FIG. 2 and forms an angle of ±5° with the perpendicular direction.

Accordingly, the lithium nickel-based positive electrode active material doped with aluminum and boron may significantly improve the cycle-life of a rechargeable lithium battery by suppressing cracks during the charge and discharge process of the battery.

The lithium nickel-based positive electrode active material includes magnesium that is capable of suppressing shrinkage at a site where lithium has been removed. As a result of the lithium nickel-based positive electrode active material including magnesium as a dopant in addition to aluminum and boron, a peak full width at half maximum (FWHM) of a (003) plane measured by X-ray diffraction analysis may be greater than or equal to about 0.1.

The FWHM of the (003) plane measured by the X-ray diffraction analysis indicates the grain size in the C-axis direction and the alignment state of the layered structure. The range of equal to about 0.1 may not be satisfied if one of the dopants is missing or another dopant is added.

The positive electrode active material according embodiments of the present disclosure provides secure stability while implementing high energy density.

The positive electrode active material may be a lithium nickel-based positive electrode active material, but as a result of the well-formed radial structure of the lithium nickel-based positive electrode active material, cracks during the charge/discharge process of a rechargeable lithium battery may be suppressed, while shrinkage at a location where lithium has been removed may be suppressed. Thus, a rechargeable lithium battery using the positive electrode active material may have a significantly improved cycle-life.

Hereinafter, the positive electrode active material of some embodiments is described in detail.

### Dopant Content

The lithium nickel-based positive electrode active material may satisfy Equation 1. $0.1 \leq \left(Y+Z\right) / X \leq 0.3$

The X, Y, and Z in the lithium nickel-based positive electrode active material of Equation 1 may satisfy Equation 2 and/or Equation 3: $0.01 \leq Y / X \leq 0.6$ $0.05 \leq Z / X \leq 0.2$

In Equations 1 to 3, X, Y, and Z represent the amounts of aluminum, boron, and magnesium, respectively, based on 100 mol% of a total metal in the lithium nickel-based positive electrode active material excluding lithium.

A description of a lithium nickel-based positive electrode active material satisfying Equations 1 to 3 is as follows:
An aluminum amount may be about 1.0 to about 2.0 parts by mole, about 1.0 to about 1.8 parts by mole, or about 1.0 to about 1.5 parts by mole based on 100 parts by mole of a total amount of nickel, cobalt, and manganese in the lithium nickel-based positive electrode active material.

A boron amount may be about 1.5 to about 3.0 parts by mole, about 1.5 to about 2.5 parts by mole, or about 1.5 to about 2.0 parts by mole based on 100 parts by mole of a total amount of nickel, cobalt, and manganese in the lithium nickel-based positive electrode active material.

A magnesium amount may be about 0.1 to about 0.5 parts by mole, about 0.1 to about 0.4 parts by mole, or about 0.1 to about 0.3 parts by mole based on 100 parts by mole of a total amount of nickel, cobalt, and manganese in the lithium nickel-based positive electrode active material.

### Chemical Formula of Lithium Nickel-based Positive Electrode Active Material

The lithium nickel-based positive electrode active material may be represented as follows:

[Chemical Formula 1] Liₐ₁Niₓ₁Co_{y1}Mn_{(1-x1-y1)}Al_{z1}Bₘ₁Mgₙ₁O_{2-b1}X_{b1}

In Chemical Formula 1, X may be one or more of F, P, and S.

In Chemical Formula 1, 0.9≤a1≤1.8 and 0≤b1≤0.10.

In Chemical Formula 1, 0.80≤x1≤1 and 0≤y1≤0.20; or 0.85≤x1≤1 and 0≤y1≤0.15; or 0.9≤x1≤1 and 0≤y1≤0.1.

In Chemical Formula 1, 0.01≤z1≤0.02, 0.0015≤m1≤0.03, and 0.001≤n1≤0.005; or 0.01≤z1≤0.018, 0.015≤m1≤0.025, and 0.001≤n1≤0.004; or 0.01≤z1≤0.015, 0.015≤m1≤0.025, and 0.001≤n1≤0.003.

The lithium nickel-based positive electrode active material may provide high capacity and thus may be applied to high-capacity, high-density rechargeable lithium batteries.

### Structure and Related Parameters of Lithium Nickel-based Positive Electrode Active Material

As discussed above, the lithium nickel-based positive electrode active material may have a radial structure as the combination of the three types of dopants.

The lithium nickel-based positive electrode active material be in a form of secondary particles in which a plurality of primary particles are agglomerated, and at least some of the primary particles in the secondary particles may be arranged radially.

The diameter (D50) particle size of the secondary particles may be about 7 to about 20 µm, about 8 to about 15 µm, or about 10 to about 15 µm. Here, the volume-cumulative average particle diameter (D50) may be measured by a particle size analyzer (PSA) for the positive electrode active materials, and the diameter of particles having a cumulative volume of 50 volume% in the particle size distribution can be taken as the average particle diameter.

The lithium nickel-based positive electrode active material may include magnesium as a dopant in addition to aluminum and boron. As a result, a peak full width at half maximum (FWHM) of a (003) plane measured by X-ray diffraction analysis may be greater than or equal to about 0.1, for example about 0.1 to about 0.15. Here, the FWHM of the (003) plane measured by the above X-ray diffraction analysis may indicate the grain size in the C-axis direction and the alignment state of the layered structure.

The lithium nickel-based positive electrode active material may include magnesium as a dopant in addition to aluminum and boron. As a result, the FWHM of the (104) plane measured by X-ray diffraction analysis may be greater than or equal to about 0.15, for example, about 0.15 to about 0.22. here, the FWHM of the (104) plane measured by the above X-ray diffraction analysis may indicate the a-b plane orientation grain size.

The lithium nickel-based positive electrode active material may have a grain size of less than or equal to about 0.9 µm, for example about 0.5 to about 0.75 µm, as measured by Electron BackScattered Diffraction (EBSD) analysis. Further, the lithium nickel-based positive electrode active material may have an aspect ratio of greater than or equal to about 1.5, for example, about 1.7 to about 2.0, as measured by EBSD analysis.

The EBSD may be measured, for example, using a QUANTAX EBSD by Bruker Corp., and the sample may be ion milled using a cross-sectional polisher (CP) such as an Ilion by Gatan Inc.). Further, EBSD may be measured using an e-flash HR EBSD detector by Bruker Corp. at an acceleration voltage of 20 keV. Here, grain size refers to the size of the single particle measured by EBSD.

If any of the aluminum, boron, and magnesium dopants is missing or another dopant is added, the above ranges may not be satisfied.

### Method of Preparing Positive Electrode Active Material

The lithium nickel-based positive electrode active material may be prepared by subjecting a raw material mixture including a nickel-based layered precursor, a lithium raw material, an aluminum raw material, a boron raw material, and a magnesium raw material to first firing, followed by washing, and then second firing.

The amount of each component in the raw material mixture may be adjusted in consideration of the stoichiometric molar ratio of the final target lithium nickel-based positive electrode active material.

The boron raw material may be partially removed during the washing process after forming the aforementioned radial structure.

### Positive Electrode

In embodiments, a positive electrode includes a current collector and a positive electrode active material layer on the current collector, wherein the positive electrode active material layer includes the aforementioned positive electrode active material. The positive electrode active material layer may further include other types of positive electrode active materials in addition to the aforementioned positive electrode active material. The positive electrode active material layer may optionally further include a binder, a conductive material, or a combination thereof.

### Binder

The binder improves binding properties of positive electrode active material particles with one another and with a current collector. Examples of binders include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon. But the present disclosure is not limited to these examples.

### Conductive Material

The conductive material is included to provide electrode conductivity and any electrically conductive material may be used that does not cause a chemical change in a battery. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The amounts of the binder and conductive material may be about 0.5 wt% to about 5 wt%, based on 100 wt% of the positive electrode active material layer.

The positive electrode current collector may include an AI thin film. But the present disclosure is not limited thereto.

### Rechargeable Lithium Battery

In embodiments, a rechargeable lithium battery includes the aforementioned positive electrode, a negative electrode, and an electrolyte. For example, the rechargeable lithium battery may include a positive electrode, a negative electrode, a separator between the positive electrode and the negative electrode, and an electrolyte solution.

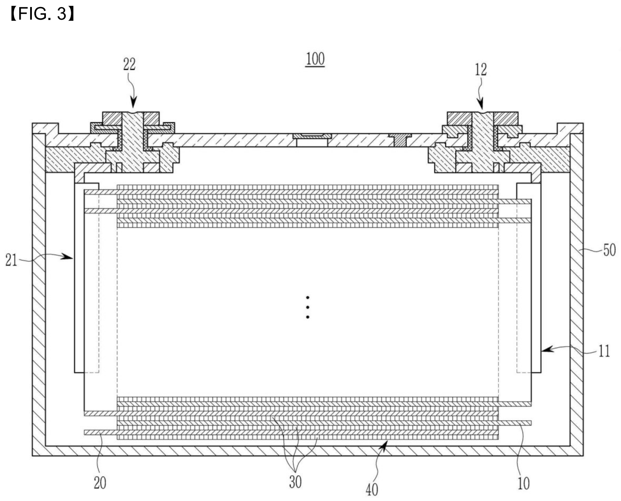

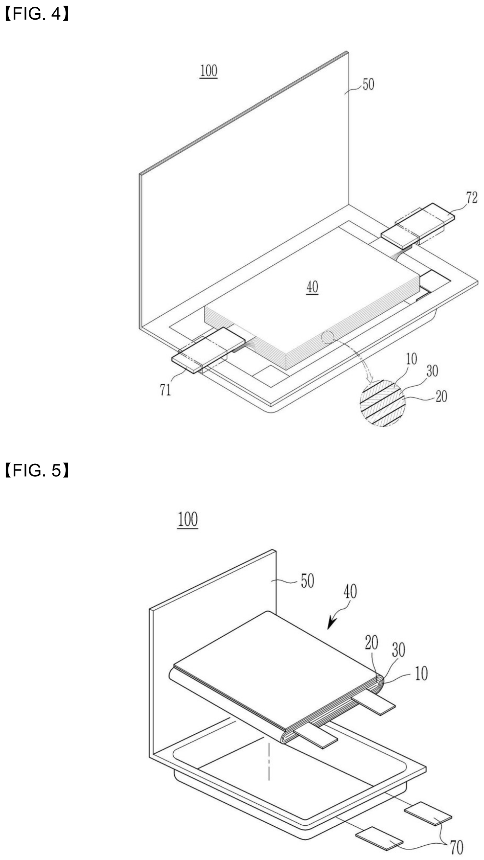

The rechargeable lithium battery may be cylindrical, prismatic, pouch, coin, etc. depending on its shape. FIGS. 2 to 5 show the rechargeable lithium batteries according to some example embodiments. FIG. 2 is a cylindrical battery, FIG. 3 is a prismatic battery, and FIGS. 4 and 5 are a pouch-shaped battery. Referring to FIGS. 2 to 5, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 2. Additionally, as shown in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, that is, a positive electrode tab 71 and a negative electrode tab 72 forming an electrical path for inducing the current formed in the electrode assembly 40 to outside of the battery.

The rechargeable lithium battery according to embodiments may be rechargeable at a high voltage or suitable for being driven at the high voltage. The rechargeable lithium battery may exhibit improved characteristics thereof under the high voltage condition.

The rechargeable lithium battery according to embodiments is designed to operate in a high voltage region, so that charging can proceed in a voltage range where the charging upper limit voltage is greater than or equal to about 4.0 V. The rechargeable lithium battery may provide high capacity and long cycle-life characteristics even when charged at high voltage by applying a positive electrode active material and a conductive material according to embodiments of the present disclosure.

### Negative Electrode

The negative electrode includes a current collector and a negative electrode active material layer on the current collector. The negative electrode active material layer may include a negative electrode active material and may further include a binder, a conductive material, or a combination thereof.

### Negative Electrode Active Material

The material that reversibly intercalates/deintercalates lithium ions may include, for example crystalline carbon, amorphous carbon, or a combination thereof as a carbon-based negative electrode active material.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surfaces of the silicon particles. For example, the silicon-carbon composite may include a secondary particle (core) in which silicon primary particles are assembled and an amorphous carbon coating layer (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, an amount of silicon may be about 10 mol% to about 50 mol% and an amount of amorphous carbon may be about 50 mol% to about 90 mol%, based on 100 mol% of the silicon-carbon composite. In addition, when the composite includes silicon, amorphous carbon, and crystalline carbon, an amount of silicon may be about 10 mol% to about 50 mol%, an amount of crystalline carbon may be about 10 mol% to about 70 mol%, and an amount of amorphous carbon may be about 20 mol% to about 40 mol%, based on 100 mol% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material that does not cause a chemical change in a battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

An amount of the negative electrode active material may be about 95 mol% to about 99.5 mol% based on 100 mol% of the negative electrode active material layer. An amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be appropriately adjusted according to the desired battery performance, which is widely known to those skilled in the art.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is in this range, the electrolyte solution has appropriate ionic conductivity and viscosity. Thus, excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Preparation of Positive Electrode Active Material

LiOH as a lithium raw material; Ni_{0.94}Co_{0.05}Mn_{0.01}OH having an average particle diameter (D₅₀) of 14 µm as a composite raw material of nickel, cobalt, and manganese; Al₂O₃ as an aluminum raw material; H₃BO₃ as a boron raw material; and Mg(OH)₂ as a magnesium raw material were mixed. The raw material mixture thereof was prepared to have a molar ratio of (Ni+Co+Mn):Al:B:Mg = 100:1.5:1.5:0.1 and a molar ratio of Li:(Ni+Co+Mn) = 1.03:1.

The raw material mixture was heat-treated a first time at 790 °C for 12 hours under an oxygen atmosphere. Thus, a lithium nickel-based positive electrode active material was thereby prepared in a form of secondary particles with an average particle diameter (D₅₀) of 14 µm where formed by agglomerated primary particles that had an average particle diameter (D₅₀) of about 3 µm.

The lithium nickel-based positive electrode active material was washed with water, wherein the volume ratio of the positive electrode active material to the washing water was 1.0:1.0. Thus, a final positive electrode active material was prepared.

### 2. Prepartion of Rechargeable Lithium Battery Cells

98.5 mol% of the prepared positive electrode active material, 1.0 mol% of a polyvinylidene fluoride binder, and 0.5 mol% of a carbon nanotube conductive agent were mixed to prepare a positive electrode active material layer slurry. The slurry was coated on an aluminum foil current collector, dried, and compressed to prepare a positive electrode.

97.5 mol% of a graphite negative electrode active material, 1.5 mol% of carboxymethyl cellulose, and 1 mol% of styrene butadiene rubber were mixed in a water solvent, thereby preparing a negative electrode active material layer slurry. The negative electrode active material layer slurry was coated on a copper foil current collector and then, dried and compressed. Thus, a negative electrode was prepared.

A polytetrafluoroethylene separator and an electrolyte solution prepared by dissolving 1 M LiPF₆ in a mixed solvent of ethylene carbonate and dimethyl carbonate in a volume ratio of 3:7 were used to make a rechargeable lithium battery cell in a known method.

### Example 2

A positive electrode active material and a rechargeable lithium battery cell were made in substantially the same manner as in Example 1 except that the molar ratio of (Ni+Co+Mn):Al:B:Mg was changed to 100:1.5:2.0:0.1.

### Example 3

A positive electrode active material and a rechargeable lithium battery cell were made in substantially the same manner as in Example 1 except that the molar ratio of (Ni+Co+Mn):Al:B:Mg was changed to 100:1.0:1.5:0.1.

### Example 4

A positive electrode active material and a rechargeable lithium battery cell were made in substantially the same manner as in Example 1 except that the molar ratio of (Ni+Co+Mn):Al:B:Mg was changed to 100:1.5:1.5:0.3.

### Comparative Example 1

A positive electrode active material and a rechargeable lithium battery cell were made in substantially the same manner as in Example 1 except that the boron raw material and the magnesium raw material were not used, and (Ni+Co+Mn):Al had a molar ratio of 100:1.5.

### Comparative Example 2

A positive electrode active material and a rechargeable lithium battery cell were made in substantially the same manner as in Example 1 except that the aluminum raw material and the magnesium raw material were not used, and (Ni+Co+Mn):B had a molar ratio of 100:1.5.

### Comparative Example 3

A positive electrode active material and a rechargeable lithium battery cell were made in substantially the same manner as in Example 1 except that the aluminum raw material and the boron raw material were not used, and Li:(Ni+Co+Mn):Mg had a molar ratio of 100:0.1.

### Comparative Example 4

A positive electrode active material and a rechargeable lithium battery cell were made in substantially the same manner as in Example 1 except that the magnesium raw material was not used, and (Ni+Co+Mn):B:Al had a molar ratio of 100:1.5:1.5.

### Comparative Example 5

A positive electrode active material and a rechargeable lithium battery cell were made in substantially the same manner as in Example 1 except that the boron raw material was not used, and (Ni+Co+Mn):Al:Mg had a molar ratio of 100:1.5:0.3.

### Comparative Example 6

A positive electrode active material and a rechargeable lithium battery cell were made in substantially the same manner as in Example 1 except that the magnesium raw material was not used, and (Ni+Co+Mn):Al:B had a molar ratio of 100:1.5:1.5.

A molar ratio of each component as the raw materials of the examples and comparative examples is shown in Table 1.

**Table 1**

| | Li:(Ni+Co+Mn) | Ni+Co+Mn | Al | B | Mg |
|---|---|---|---|---|---|
| Example 1 | 1.03 | 100 | 1.5 | 1.5 | 0.1 |
| Example 2 | 1.03 | 100 | 1.5 | 2.0 | 0.1 |
| Example 3 | 1.03 | 100 | 1.0 | 1.5 | 0.1 |
| Example 4 | 1.03 | 100 | 1.5 | 1.5 | 0.3 |
| Comparative Example 1 | 1.03 | 100 | 1.5 | - | - |
| Comparative Example 2 | 1.03 | 100 | - | 1.5 | - |
| Comparative Example 3 | 1.03 | 100 | - | - | 0.1 |
| Comparative Example 4 | 1.03 | 100 | 1.5 | 1.5 | - |
| Comparative Example 5 | 1.03 | 100 | 1.5 | - | 0.1 |
| Comparative Example 6 | 1.03 | 100 | - | 1.5 | 0.1 |

In Table **1,** the units except for Li:( Ni+Co+Mn) are parts by mole.

### Evaluation Example 1: Element Amount in Positive Electrode Active Material

The positive electrode active materials of the examples and the comparative examples were measured with respect to each constituent element content through inductively coupled plasma spectrometry (ICP) analysis. The results are shown in Table 2 below.

**Table 2**

| | Li:(Ni+Co+Mn) | Ni+Co+Mn | Al | B | Mg |
|---|---|---|---|---|---|
| Example 1 | 1.03:1 | 100 | 1.5 | 0.06 | 0.1 |
| Example 2 | 1.03:1 | 100 | 1.5 | 0.08 | 0.1 |
| Example 3 | 1.03:1 | 100 | 1.0 | 0.06 | 0.1 |
| Example 4 | 1.03:1 | 100 | 1.5 | 0.06 | 0.3 |
| Comparative Example 1 | 1.03:1 | 100 | 1.5 | - | - |
| Comparative Example 2 | 1.03:1 | 100 | - | 0.06 | - |
| Comparative Example 3 | 1.03:1 | 100 | - | - | 0.1 |
| Comparative Example 4 | 1.03:1 | 100 | 1.5 | 0.06 | - |
| Comparative Example 5 | 1.03:1 | 100 | 1.5 | - | 0.1 |
| Comparative Example 6 | 1.03:1 | 100 | - | 0.06 | 0.1 |

In Table 2, the units except for Li:( Ni+Co+Mn) are parts by mole.

### Evaluation Example 2: Structural Analysis of Positive Electrode Active Material

The positive electrode active materials of the examples and the comparative examples were measured with respect to a peak full width at half maximum (FWHM) of the (003) plane and a peak full width at half maximum (FWHM) of the (104) plane through an X-ray diffraction analysis. The positive electrode active materials of the examples and the comparative examples were also measured with respect to a grain size and an aspect ratio through EBSD (Electron Back Scattered Diffraction) analysis. The results are shown in Table 3.

**Table 3**

| | XRD | | EBSD | |
|---|---|---|---|---|
| | FWHM (003) | FWHM (104) | Grain size (µm) | Aspect ratio |
| Example 1 | 0.103 | 0.170 | 0.712 | 1.73 |
| Example 2 | 0.133 | 0.201 | 0.569 | 1.91 |
| Example 3 | 0.134 | 0.220 | 0.508 | 1.97 |
| Example 4 | 0.105 | 0.169 | 0.703 | 1.74 |
| Comparative Example 1 | 0.085 | 0.140 | 0.982 | 1.18 |
| Comparative Example 2 | 0.078 | 0.131 | 0.452 | 1.50 |
| Comparative Example 3 | 0.084 | 0.143 | 0.484 | 1.21 |
| Comparative Example 4 | 0.094 | 0.149 | 0.493 | 1.66 |
| Comparative Example 5 | 0.087 | 0.144 | 0.975 | 1.33 |
| Comparative Example 6 | 0.081 | 0.130 | 0.442 | 1.61 |

### Evaluation Example 3: Evaluation of Initial Charge/Discharge Capacity and Efficiency

The rechargeable lithium battery cells made in Examples and Comparative Examples were charged at 25 °C with a constant current of 0.2 C to an upper limit voltage of 4.3 V and a constant voltage of 0.05 C. Then the rechargeable lithium battery cells were discharged at 0.2 C to a final voltage of 3.0 V to perform an initial charge/discharge. In Table 4 below, initial charge capacity, initial discharge capacity, and a ratio of the latter to the former as efficiency are shown.

### Evaluation Example 4: Room-temperature Cycle-life Characteristics

After the initial charge/discharge of Evaluation Example 3, the cells were 60 repeatedly charged/discharged times at 1.0 C within a voltage range of 3.0 V to 4.3 V at 25 °C to calculate a ratio of 60^{th} cycle discharge capacity to the initial discharge capacity. The results are shown in Table 4.

**Table 4**

| | 0.2 C charge (mAh/g) | 0.2 C discharge (mAh/g) | Efficiency (%) | Room-temperature cycle-life (%, 25 °C, 60 cyc) |
|---|---|---|---|---|
| Example 1 | 244.4 | 213.8 | 87.4 | 98.2 |
| Example 2 | 243.2 | 214.3 | 88.1 | 98.7 |
| Example 3 | 244.0 | 214.7 | 88.0 | 98.3 |
| Example 4 | 244.3 | 213.6 | 87.5 | 98.5 |
| Comparative Example 1 | 243.0 | 210.5 | 86.6 | 95.0 |
| Comparative Example 2 | 243.1 | 210.9 | 86.8 | 96.0 |
| Comparative Example 3 | 242.0 | 211.5 | 87.4 | 94.9 |
| Comparative Example 4 | 243.7 | 212.0 | 87.0 | 96.1 |
| Comparative Example 5 | 243.2 | 211.1 | 86.8 | 95.1 |
| Comparative Example 6 | 243.4 | 211.9 | 87.1 | 96.2 |

Based on the evaluations of the examples and comparative examples, the following conclusions can be drawn.

The positive electrode active material of embodiments according to the present disclosure secures stability while implementing high energy density.

The positive electrode active material of embodiments was a lithium nickel-based positive electrode active material, having a radial structure that was well formed. This material is suppressed from a contraction where lithium is removed and cracks do not form during a charge/discharge process of a rechargeable lithium battery made with the positive electrode active material.

Thus, a rechargeable lithium battery that includes the positive electrode active material of embodiments of the present disclosure may have significantly improved cycle-life.

While this disclosure has been described in connection with what is presently considered to be practical example embodiments, the present disclosure is not limited to the disclosed embodiments. Rather, to the present disclosure includes various modifications and equivalent arrangements.

**<Description of Symbols>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material for a rechargeable lithium battery, the positive electrode active material comprising:
a lithium nickel-based positive electrode active material having a nickel amount of greater than or equal to about 80 mol% based on 100 mol% of metal in the lithium nickel-based positive electrode active material excluding lithium,
wherein the lithium nickel-based positive electrode active material comprises aluminum, boron, and magnesium as dopants, and
wherein a peak full width at half maximum (FWHM) of a (003) plane measured by X-ray diffraction analysis is greater than or equal to about 0.1.

2. The positive electrode active material as claimed in claim 1, wherein the lithium nickel-based positive electrode active material satisfies $0.1 \leq \left(Y+Z\right) / X \leq 0.3$ wherein X, Y, and Z represent the amounts of aluminum, boron, and magnesium, respectively, based on 100 mol% of total metal in the lithium nickel-based positive electrode active material excluding lithium.

3. The positive electrode active material as claimed in claim 2, wherein the lithium nickel-based positive electrode active material satisfies $0.01 \leq Y / X \leq 0.6$ wherein X and Y are the amounts of aluminum and boron, respectively, based on 100 mol% of total metal in the lithium nickel-based positive electrode active material excluding lithium.

4. The positive electrode active material as claimed in claim 2, wherein the lithium nickel-based positive electrode active material satisfies $0.05 \leq Z / X \leq 0.2$ wherein X and Z are the amounts aluminum and magnesium, respectively, based on 100 mol% of total metal in the lithium nickel-based positive electrode active material excluding lithium.

5. The positive electrode active material as claimed in any one of claims 1-4, wherein an aluminum amount is about 1.0 to about 2.0 parts by mole based on 100 parts by mole of a total amount of nickel, cobalt, and manganese in the lithium nickel-based positive electrode active material.

6. The positive electrode active material as claimed in any one of claims 1-5, wherein a boron amount is about 1.5 to about 3.0 parts by mole based on 100 parts by mole of a total amount of nickel, cobalt, and manganese in the lithium nickel-based positive electrode active material.

7. The positive electrode active material as claimed in any one of claims 1-6, wherein a magnesium amount is about 0.1 to about 0.5 parts by mole based on 100 parts by mole of a total amount of nickel, cobalt, and manganese in the lithium nickel-based positive electrode active material.

8. The positive electrode active material as claimed in any one of claims 1-7, wherein the lithium nickel-based positive electrode active material is represented by Chemical Formula 1:
Liₐ₁Niₓ₁Co_{y1}Mn_{(1-x1-y1)}Al_{z1}Bₘ₁Mgₙ₁O_{2-b1}X_{b1}
wherein0.9≤a1≤1.8, 0≤b1≤0.1, 0.80≤x1≤1, 0≤y1≤0.20, 0.01≤z1≤0.02, 0.015≤m1≤0.03, 0.001≤n1≤0.005, and X is one or more of F, P, and S.

9. The positive electrode active material as claimed in any one of claims 1-8, wherein the lithium nickel-based positive electrode active material is in a form of secondary particles in which a plurality of primary particles are agglomerated, and at least some of the primary particles in the secondary particles are arranged radially.

10. The positive electrode active material as claimed in claim 9, wherein a diameter (D50) of the secondary particles is about 7 to about 20 µm.

11. The positive electrode active material as claimed in any one of claims 1-10, wherein the lithium nickel-based positive electrode active material has a peak full width at half maximum of the (104) plane measured according to X-ray diffraction analysis of greater than or equal to about 0.15.

12. The positive electrode active material as claimed in any one of claims 1-11, wherein the lithium nickel-based positive electrode active material has a grain size measured by Electron Back Scattered Diffraction analysis of about 0.5 to about 0.9 µm and an aspect ratio that is greater than or equal to about 1.5.

13. A positive electrode for a rechargeable lithium battery, the positive electrode comprising:
a positive electrode current collector;
a positive electrode active material layer on the positive electrode current collector,
wherein the positive electrode active material layer comprises the positive electrode active material as claimed in any one of claims 1-12.

14. A rechargeable lithium battery comprising:
a positive electrode; a negative electrode; and
an electrolyte,
wherein the positive electrode comprises the positive electrode for the rechargeable lithium battery as claimed in claim 13.
